**Europäisches Patentamt**

**European Patent Office**

**Office européen des brevets**

(11) Publication number: **0 146 812**
A2

# EUROPEAN PATENT APPLICATION

(21) Application number: **84114432.2**

(22) Date of filing: **30.11.84**

(51) Int. Cl.⁴: **G 07 F 7/10**
**G 07 C 9/00**

(30) Priority: **21.12.83 US 564474**

(43) Date of publication of application:
**03.07.85 Bulletin 85/27**

(84) Designated Contracting States:
**DE FR GB**

(71) Applicant: **International Business Machines Corporation**
**Old Orchard Road**
**Armonk, N.Y. 10504(US)**

(72) Inventor: **Couch, Wilfred R.**
**14 Pine Knoll Drive**
**Lake Wylie South Carolina 29710(US)**

(74) Representative: **Atchley, Martin John Waldegrave**
**IBM United Kingdom Patent Operations Hursley Park**
**Winchester, Hants, SO21 2JN(GB)**

(54) **Automatic self service machine and method.**

(57) An automatic self service machine comprises means (12) for performing selected transactions on the machine, storage means (20b) for storing data identifying authorised users of the machine, a card reader (16) for reading encoded machine readable user identification data recorded on a card inserted by a user into the machine, comparison means (24) for comparing the read user identification data with the stored authorised user identifying data in order to determine whether the user is an authorised user, and means (24) for permitting an authorised user to perform transactions on the machine.

The machine is characterised in that the card reader will read any identification data which is unique to the user.

A method of operating an automatic self service machine by a user comprises inserting into the machine a card recorded with encoded machine readable identification data identifying the user, comparing the read identification data with stored data identifying authorised users in order to determine whether the read data identifies an authorised user, and permitting the user to perform transactions on said machine if the user is identified as an authorised user.

The method is characterized in that the identification data is any data which is unique to the user.

FIG. 2

**0146812**

AUTOMATIC SELF SERVICE MACHINE AND METHOD

This invention relates to an automatic self service system and particularly to such a system which employs stand-along machines for dispensing money, tickets or other articles of value and/or for receiving deposits, payment envelops or articles such as mail to be delivered by a delivery service, or for carrying out other transactions.

Stand alone vending machines are known. Some of these machines will accept a credit card in payment for articles dispensed. An automatic teller machine is a special purpose vending machine which is now commonly used by banks for carrying out routine banking transactions, such as dispensing money or receiving deposits. These machines provide the customer with the convenience of being able to satisfy their banking needs at any time of day or night regardless of banking hours, and the machines also relieve the bank tellers of such routine transactions, thereby providing better utilisation and efficiency of the banking staff.

However, one limitation to the use of automatic self service machines, such as teller machines, is their expense. Not only are the machines themselves costly, but also the machines are expensive to operate since they typically must be continuously connected to a host computer via a data communication line in an "on-line" manner for instantly interchanging information regarding the transactions performed at the machine. Also, it is necessary for the owner of the machine to issue encoded machine readable identification cards and personal identification numbers to each customer or user, for enabling each customer or user to use the machines.

In an effort to overcome this limitation and reduce the cost of automatic teller systems, "stand-alone" automatic teller machines have been developed which operate in an "off-line" mode without the necessity for a continuous data communication link to a host computer. One way

**0146812**

that these stand-alone systems may operate involves storing information concerning the customer's account and his balance on the encoded identification card itself.  However, this has obvious drawbacks from the standpoint of security since it may be possible for a customer to alter the information contained on the card, and loss of the card would result in loss of the information.

Another approach which has been used for stand-along automatic self service machine systems requires the loading into each machine of a separate data medium which contains information concerning the customers authorised to transact business with the machine.  The data medium typically is in the form of magnetically recorded diskettes or cassettes, and provides a list of customers authorised or not authorised to conduct transactions at the machine.  Transaction details are recorded on the data medium, and periodically the data is transmitted or transported to a host computer for processing and updating the customers' accounts.  However, this approach suffers from the expense of issuing and maintaining special identification cards governing each customer's access to the machine.  Additionally, the procedures and time involved in applying for and obtaining a card may discourage prospective new customers from using the machine.  Others may object to the necessity of carrying around an extra card in addition to the numerous bank and store cards already in their possession.

The object of the present invention is to provide an improved automatic self service machine and method of operating such a machine.

According to the present invention an automatic self service machine comprises means for performing selected transactions on said machine, storage means for storing data identifying authorised users of the machine, a card reader for reading encoded machine readable user identification data recorded on a card inserted by a user into the machine, comparison means for comparing the read user identification data with the stored authorised user identifying data in order to determine whether the user is an authorised user, and means for permitting an authorised user to perform transactions on the machine.

The machine is characterised in that the card reader will read any identification data which is unique to the user and it is therefore not necessary for the user to be supplied with a special card. The user can employ any machine readable card already in his possession as the identification card or "key" for gaining access to the machine and being able to perform transactions.

The machine may also include verification means for verifying the read user identification data, if the machine determines that the user is not an authorised user, in order to decide whether the user should become an authorised user, and recording means for entering into the storage means data identifying new authorised users.

Therefore, if the machine does not recognise the read data as relating to an authorised user the machine verifies the data and if it decides that the user can become an authorised user it stores the identification data for the user. If the user subsequently inserts his card into the machine, the machine will recognise the data then read as relating to an authorised user and will permit the user to perform transactions. This avoids the user having to be supplied with a special card to provide authorisation for performing transactions on the machine and avoids any waiting time associated with the supply of such a card.

According to another aspect of the invention a method of operating an automatic self service machine by a user comprises inserting into the machine a card recorded with encoded machine readable identification data identifying the user, comparing the read identification data with stored data identifying authorised users of the machine in order to determine whether the read data identifies an authorised user, and permitting the user to perform transactions on said machine, if the user is identified as an authorised user.

The method of operation is characterised in that the identification data is any data which is unique to the user.

The advantage of this method of operation is that the user does not need to use a special card.  The user can employ any machine readable card already in his possession as the identification card or "key" for gaining access to the machine and being able to perform transactions.

The method may also include the step of verifying the read identification data, if the user is not an authorised user, in order to decide whether the user is suitable to become an authorised user, storing the read identification data if it is decided that the user can become an authorised user, and using the stored identification data for comparison with the data read as a result of subsequent insertion of a card by the same user.

Therefore, if the read data is not recognised as relating to an authorised user, the data is verified and, if it is decided that the user can become an authorised user, the identification data is stored. If the user subsequently inserts his card into the machine, the data then read will be recognised as relating to an authorised user and the user will be permitted to perform transactions.

In order that the invention may be more readily understood an embodiment will now be described with reference to the accompanying drawings, in which:

Figure 1 is a perspective view of an automatic teller machine in accordance with the present invention,

Figure 2 is a schematic diagram of the internal components of the automatic teller machine illustrated in Figure 1,

Figure 3 is a flow chart illustrating how the automatic teller machine illustrated in Figure 1 operates in establishing authorisation for a prospective user, and

Figure 4 is a flow chart illustrating how the automatic teller machine illustrated in Figure 1 operates in carrying out a money dispensing transaction for an authorised user.

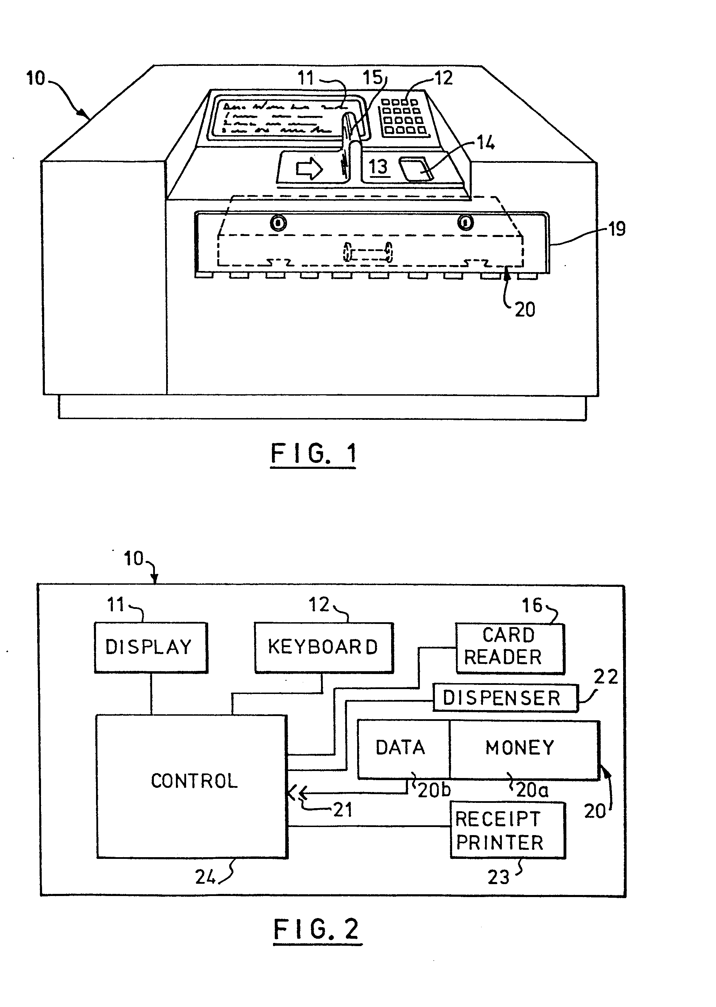

Referring now more particularly to the drawings, Figure 1 illustrates by way of example an automatic teller machine 10 in accordance with the present invention. It is to be understood that the invention is equally applicable to other self service vending or deposit receiving machines. The machine 10 includes a display screen 11 for conveying information or instructions to the user on how to operate the machine, and a suitable keyboard 12 where the user may enter information, such as identification numbers, or information relating to the banking transaction. Means is also provided for receiving a user's identification card, and for reading therefrom information magnetically encoded on the card. As illustrated, the machine includes a slide member 13, having an opening or recess 14 therein for receiving the user's identification card. A handle 15 provided on the slide permits the user to move the slide in the direction as shown in the arrow to move the card receiving recess 14 into the interior of the machine to permit reading of the magnetically encoded information from the card. A card reader, shown at 16 in Figure 2, is appropriately located within the machine for reading the magnetically encoded information from the card as the card is moved into the reader. Upon the completion of the transaction, when the slide 13 is moved back to the starting position, the money which is dispensed, together with a receipt, is made available to the user along with the user's identification card.

A portable storage cartridge in which money and pertinent information or data is stored is generally indicated by the reference character 20. As shown, the cartridge 20 is mounted within the machine 10, and can be removed therefrom through a door 19 conveniently located at the front or rear of the machine.

The internal elements of the machine are schematically represented in Figure 2. The cartridge 20 includes a first portion or area 20a adapted for receiving and storing currency of a given denomination, such as five dollar bills, for example. Also provided in a second portion or area 20b of the cartridge 20 is a non-volatile memory means for receiving and storing information relating to the users of the machine and to the dispensing of money. Any suitable non-volatile memory device can be employed, such as for example a bubble memory, a battery-powered RAM, magnetic disc or tape, etc. or combinations of these. the cartridge 20 also includes suitable connectors 21 for providing an electrical connection between the memory means of the cartridge and a control unit 24 provided in the machine. A dispenser unit 22 cooperates with the first portion 20a of cartridge 20 for withdrawing money from the cartridge and dispensing it to the user during a money dispensing transaction. the machine also includes a receipt printer 23 for printing a receipt with information concerning the transaction carried out at the machine. As illustrated, the receipt printer 23, as well as the other components of the machine are connected to control unit 24 for controlling operation of the automatic teller machine. The control unit 24 may include a suitably programmed microprocessor.

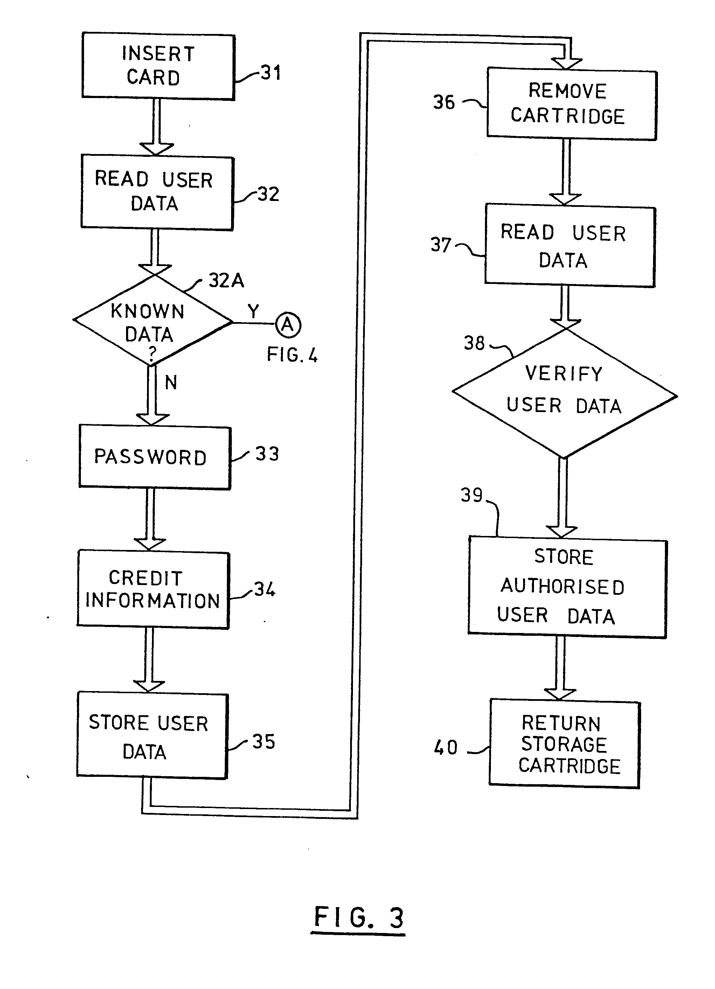

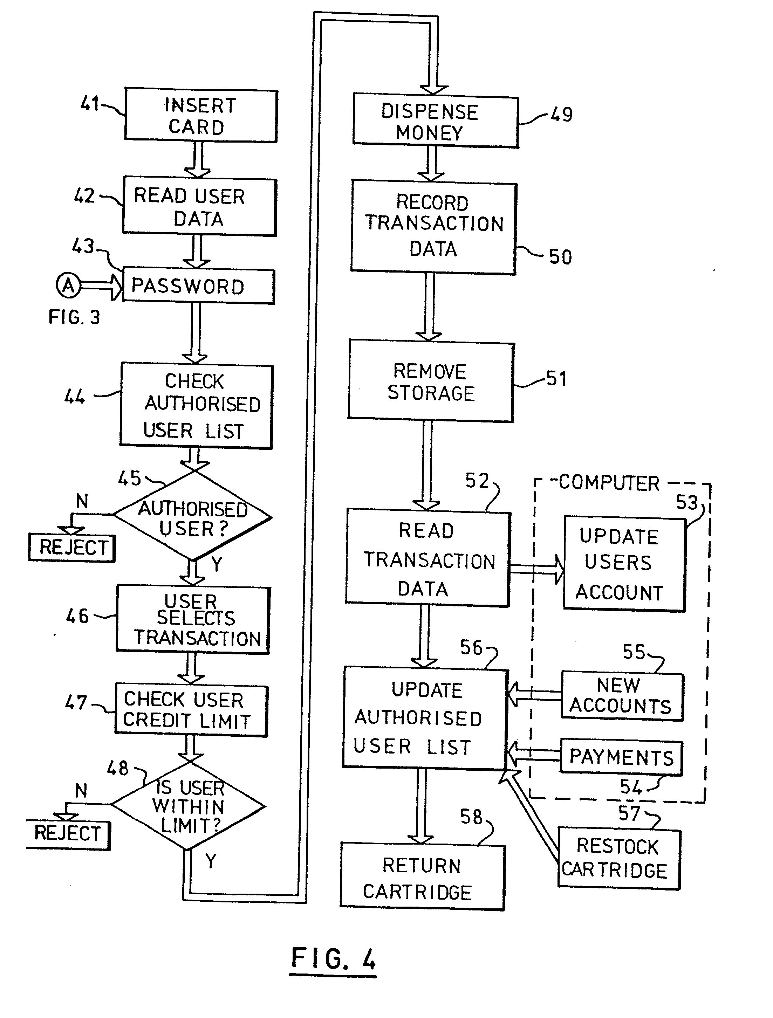

Figures 3 and 4 schematically illustrate how the automatic teller machine is operated. To use the machine, it is first necessary to become an authorised user and to open an account. Prospective users of the machine are prompted to enter appropriate identification information. As shown in Figure 3 at 31, the prospective user must first insert into the card reader of the machine a card containing magnetically encoded information which is unique to the prospective user and which will thereafter serve as the user's authorisation card for using the machine. For an authorisation card, the user may use any existing credit/debit card already in the user's possession provided the card includes encoded information uniquely identifying the user. Such cards typically have a magnetic stripe on the rear surface thereof containing encoded information identifying the issuer of the card and the user account number.

The user inserts the card into the card receiving slot 14 of the machine, as indicated at 31, and the machine reads the magnetically encoded identification therefrom (32). If the identification data read from the card matches that of an authorised user stored in the memory of the machine (20b), the transaction proceeds as illustrated and described at "A" in Figure 4, as indicated at 32a in Figure 3.

If the identification data read from the card is not known, then information is displayed prompting the user to enter other identification information, such as a password, number, etc., which is known only to the user and is to be remembered by the user (33). When later using the machine, the user will be requested to enter this password or number. The user may then be requested to enter certain credit information (34). The particular credit information required may be determined by the owner of the machine. For example, the machine may request the user to insert other credit or bank cards which will then be read by the machine, or the user may be prompted to enter the name of his bank, account number, etc. All of this user credit information is stored in the memory means 20b provided in the cartridge 20, as indicated at 35.

Periodically, the machine is serviced and the cartridge 20 is transported to a central processing facility, as indicated at 36. At this time the information provided by users and stored on the cartridge 20 can be read by the owner of the machine, as shown at 37, and the owner has the opportunity to verify the credit of the users (38) and to determine which of the users will be authorised for using the machine and to issue credit limits for each of the authorised users. Identification data for the newly authorised users is added to the list of data of authorised users in the memory 20b of the cartridge, as shown at 39. Thus, when this cartridge is returned to the machine (40), the newly authorised users will then be able to withdraw cash or carry out other approved transactions at the machine. To ensure that the correct cartridge is returned to the correct machine, each cartridge may be encoded with identification code means, and the machine may include means for reading this identification code from the cartridge when the cartridge is installed and for signalling if the identification code of the cartridge does not match that of the machine.

Considering now the cash dispensing transaction, as shown in Figure 4, an authorised user desiring to withdraw cash from the machine inserts his authorisation identification card (41) and the identification data is read therefrom (42). The user then enters the appropriate identification information, e.g. password (43). As shown at 44-45, the machine then checks the memory means 20b in cartridge 20 to see if the user is an authorised user. The user then selects the type of transaction, e.g. withdrawal in which case the user indicates the amount of cash to be withdrawn (46), whereupon the machine checks whether the user is within his credit limit (47, 48). If so, the machine then dispenses the requested amount of cash (49), and information concerning the cash dispensing transaction is recorded on the cartridge (50). Later, as indicated at 51, when the cartridge is removed from the machine and returned to the central processing facility, the connector 21 provided on the memory 20b is connected to a computer, and the data contained in the cartridge is read. As seen in Figure 4, the recorded information relating to cash dispensing transactions is read from the cartridge 20 (52), and each authorised user's account is appropriately updated (53). At this time, it also is possible to update each authorised user's credit limits, to take into account payments (54) that have been made, or non payments as the case may be, to remove from the list of authorised users any delinquent users, and to add any newly authorised users (55) to the list of authorised users. All of this updated information is then stored on the cartridge 20, as indicated at 56. The cartridge is replenished with money (57), and is then ready to be returned to the machine (58) the next time that the machine is serviced.

**0146812**

CLAIMS

1.  An automatic self service machine comprising

means (12) for performing selected transactions on said machine, storage means (20b) for storing data identifying authorised users of said machine,

a card reader (16) for reading encoded machine readable user identification data recorded on a card inserted by a user into said machine,

comparison means (24) for comparing said read user identification data with said stored authorised user identifying data in order to determine whether said user is an authorised user,

and means (24) for permitting an authorised user to perform transactions on said machine,

characterised in that said card reader will read any identification data which is unique to said user.

2.  An automatic self service machine as claimed in any one of the preceding claims

characterised in that said machine comprises

means (12) for receiving and interpreting additional identification data inserted by said user, and

comparison means (24) for comparing said additional identification data with said stored authorised user identifying data in order to determine whether said user is an authorised user.

3.  An automatic self service machine as claimed in claim 2

characterised in that said additional identification data is a password.

4.  An automatic self service machine as claimed in any one of the preceding claims

characterised in that said machine comprises

storage means (20b) for storing said read user identification data,

verification means for verifying said stored user identification data in order to decide whether a user should become an authorised user,

and recording means for entering into said storage means (20b) data identifying new authorised users.

5.   An automatic self service machine as claimed in claim 4 as dependent on claim 2

characterised in that said additional identification data is credit. information.

6.   An automatic self service machine as claimed in claim 4 or claim 5 characterised in that

said storage means (20b) is removable from said machine,

and said verification means and said recording means are located remote from the remaining components of said machine.

7.   An automatic self service machine as claimed in any one of the preceding claims

characterised in that said machine comprises display means (11) for displaying instructions to said user.

8.   An automatic self service machine as claimed in any one of the preceding claims

characterised in that said machine comprises storage means (20a) for storing material to be used for performing transactions.

9.   A method of operating an automatic self service machine by a user comprising

inserting into said machine a card recorded with encoded machine readable identification data identifying said user,

comparing said read identification data with stored data identifying authorised users in order to determine whether said read data identifies an authorised user,

and permitting said user to perform transactions on said machine if said user is identified as an authorised user,

characterised in that said identification data is any data which is unique to said user.

10.   A method of operating an automatic self service machine by a user as claimed in claim 9

characterised by the steps of

inserting additional identification data identifying said user, and comparing said additional identification data with said stored authorised user identifying data in order to determine whether said additional identification data identifies an authorised user.

11.   A method of operating an automatic self service machine as claimed in claim 10

characterised in that said additional identification data is a password.

12.   A method of operating an automatic self service machine by a user as claimed in any one of the preceding claims 9, 10 or 11

characterised by the steps of

verifying said read identification data, if said user is not an authorised user, in order to decide whether said user is suitable to become an authorised user,

storing said read identification data if it is decided that said user can become an authorised user,

and using said stored identification data for comparison with the data read as a result of subsequent insertion of a card by the same user.

13.   A method of operating an automatic self service machine as claimed in claim 12 as dependent on claim 10

characterised in that said additional identification data is credit information.

F I G. 1

F I G. 2

FIG. 3

0146812

41 — INSERT CARD

42 — READ USER DATA

43 — PASSWORD

(A)→

FIG. 3

44 — CHECK AUTHORISED USER LIST

45 — AUTHORISED USER?

N → REJECT

Y

46 — USER SELECTS TRANSACTION

47 — CHECK USER CREDIT LIMIT

48 — IS USER WITHIN LIMIT?

N → REJECT

Y

49 — DISPENSE MONEY

50 — RECORD TRANSACTION DATA

51 — REMOVE STORAGE

52 — READ TRANSACTION DATA

┌ ─ COMPUTER ─ ─ ┐

53 — UPDATE USERS ACCOUNT

56 — UPDATE AUTHORISED USER LIST

55 — NEW ACCOUNTS

54 — PAYMENTS

57 — RESTOCK CARTRIDGE

58 — RETURN CARTRIDGE

F I G. 4